# EUROPÄISCHE PATENTSCHRIFT

(11) **EP 3 222 464 B1**
(45) Veröffentlichungstag und Bekanntmachung des Hinweises auf die Patenterteilung: **08.01.2020**
(21) Anmeldenummer: 17155176.5
(22) Anmeldetag: 08.02.2017
(51) Int. Cl.: B60P 1/64, B60P 7/13

(54) **RAHMENSYSTEM FÜR AUFBAUTEN VON KRAFTFAHRZEUGEN**
FRAME SYSTEM FOR MOTOR VEHICLE STRUCTURES
SYSTÈME DE CADRE POUR CARROSSERIES DE VÉHICULES AUTOMOBILES

(30) Priorität: 24.03.2016 DE 102016204985
(43) Veröffentlichungstag der Anmeldung: 27.09.2017
(73) Patentinhaber: Sonntag transport technology GmbH & Co. KG, 57368 Lennestadt (DE)
(72) Erfinder: AHLBÄUMER, Matthias, 57368 Lennestadt (DE)
(74) Vertreter: dompatent von Kreisler Selting Werner - Partnerschaft von Patent- und Rechtsanwälten mbB

(56) Entgegenhaltungen:
- EP-A2- 1 300 284
- EP-A2- 1 637 393
- US-A- 3 367 615
- US-A- 5 160 224

## Beschreibung

Die Erfindung betrifft ein Rahmensystem für Aufbauten von Kraftfahrzeugen, insbesondere Lastkraftwagen, sowie ein Kraftfahrzeug mit einem derartigen Rahmensystem.

Bei Kraftfahrzeugen, insbesondere Lastkraftwagen, besteht grundsätzlich der Wunsch flexibler Einsatzmöglichkeiten. Daher werden bei Lastkraftwagen häufig Transportflächen oder Träger genormt, mit denen unterschiedliche Lasten oder Fahrzeugaufbauten transportiert werden können. Beispielsweise sind Container genormt, die sogenannten Iso-Container, die flexibel auf unterschiedliche Lastkraftwagen, die die entsprechenden Transportmöglichkeiten besitzen, geladen werden können.

Die bekannten Rahmensysteme, die auch als Wechselsysteme bekannt sind, ermöglichen auch eine Ausrüstung des Lastkraftwagens für unterschiedliche Einsatzzwecke, beispielsweise indem Container unterschiedlicher Ausrüstung auf einen Lastkraftwagen gesetzt werden, wie beispielsweise Container mit Feuerwehrausrüstung, Wohncontainer, Kühlcontainer, Sanitärcontainer u.Ä..

Für die Befestigung der Container ist dabei ein Trägerrahmen vorgesehen, der mit dem Fahrgestell des Lastkraftwagens verbunden ist. Der Trägerrahmen weist Befestigungsmittel für die Container auf, die ein Lösen des Containers auf einfache Art und Weise ermöglichen.

Bei Betreibern von großen Fahrzeugflotten sind derartige Rahmensysteme von besonderem Vorteil, da durch den flexiblen Einsatz auch sichergestellt ist, dass bei einem Defekt eines Fahrzeugs die Aufbauten auf einem anderen Fahrzeug verwendet werden können und lediglich das Fahrzeug ohne Aufbauten ausfällt.

Fest vorgegebene Befestigungspunkte an dem Trägerrahmen limitieren jedoch die Verwendung eines mit diesem Trägerrahmen versehenen Lastkraftwagens, da dieser ausschließlich mit an diese Befestigungspunkte angepasste Aufbauten verwendet werden können.

Es ist daher die Aufgabe der vorliegenden Erfindung, ein Rahmensystem für Kraftfahrzeuge, insbesondere Lastkraftwagen, sowie ein Kraftfahrzeug zu schaffen, wobei ein flexibler Einsatz mit unterschiedlichen Aufbauten ermöglicht ist.

Die Druckschriften EP 1 300 284 A2 und EP 1 637 393 A2 offenbaren Rahmensysteme für Aufbauten von Kraftfahrzeugen nach dem Oberbegriff des Anspruchs 1.

Das erfindungsgemäße Rahmensystem ist definiert durch die Merkmale des Anspruchs 1.

Das erfindungsgemäße Kraftfahrzeug durch die Merkmale des Anspruchs 12.

Bei einem erfindungsgemäßen Rahmensystem für Aufbauten von Kraftfahrzeugen, insbesondere Lastkraftwagen, mit einem Systemrahmen mit mindestens zwei Querträgern, die quer zu einer Mittelebene des Systemrahmens angeordnet sind, mit Abstützflächen, auf denen die Aufbauten in einem an dem Systemrahmen befestigten Zustand aufliegen, wobei die Abstützflächen an den Enden von mindestens zwei der Querträger angeordnet sind und mit Aufbautenbefestigungsmitteln zum lösbaren Befestigen der Aufbauten an dem Systemrahmen, wobei die Aufbautenbefestigungsmittel in den Abstützflächen angeordnet sind, und wobei jeweils eine der Abstützflächen durch eine Adaptervorrichtung gebildet ist, die lösbar an einem Ende eines der Querträger befestigt ist, wobei die Adaptervorrichtungen austauschbar ausgebildet sind und/oder eine Adaptervorrichtung in unterschiedlichen, fest vorgegebenen Positionen an einem Ende eines der Querträger befestigbar ist, ist vorgesehen, dass die in Bezug auf die Mittelebene des Systemrahmens auf unterschiedlichen Seiten des Systemrahmens angeordneten Adaptervorrichtungen gegeneinander austauschbar sind. Mit anderen Worten: Beispielsweise sich an einem Querträger gegenüberliegende Adaptervorrichtungen können gegeneinander ausgetauscht werden. Ferner ist vorgesehen, dass das Aufbautenbefestigungsmittel in Bezug auf eine vertikale Mittelebene der Adaptervorrichtung exzentrisch an der Adaptervorrichtung angeordnet ist, wobei sich die Mittelebene der Adaptervorrichtung im an dem Querträger befestigten Zustand in Längsrichtung des Querträgers erstreckt.

Durch die erfindungsgemäße Ausgestaltung des Rahmensystems wird ermöglicht, dass das Rahmensystem flexibel und auf einfache Art und Weise an unterschiedliche Aufbauten anpassbar ist, indem die Position der Abstützfläche und der Aufbautenbefestigungsmittel veränderbar ist. Hierzu können beispielsweise Adaptervorrichtungen vorgesehen sein, bei denen die Aufbautenbefestigungsmittel und die Abstützflächen im Vergleich zu anderen Adaptervorrichtungen an unterschiedlicher Stelle angeordnet sind, so dass beispielsweise die Anpassung durch die Verwendung einer anderen Adaptervorrichtung erfolgen kann. Gleichzeitig oder alternativ kann vorgesehen sein, dass die Adaptervorrichtung an unterschiedlichen Positionen an dem Querträger befestigbar ist, so dass hierdurch eine Anpassung des Rahmensystems an unterschiedliche Aufbauten erfolgen kann.

Das Vorsehen von gegeneinander austauschbaren Adaptervorrichtungen, die in Bezug auf die Mittelebene des Systemrahmens auf unterschiedlichen Seiten des Systemrahmens angeordnet sind, ist von Vorteil, wenn die sich gegenüberliegenden Adaptervorrichtungen nicht identisch ausgebildet sind, sondern beispielsweise spiegelverkehrt. Durch einen Austausch von unterschiedlichen seitenangeordneten Adaptervorrichtungen kann somit beispielsweise eine Veränderung der Position der Aufbautenbefestigungsmittel erfolgen.

Durch die exzentrische Anordnung des Aufbautenbefestigungsmittels in Bezug auf eine vertikale Mittelebene der Adaptervorrichtung lässt sich auf einfache Art und Weise die Position der Aufbautenbefestigungsmittel in Längsrichtung des Rahmensystems verändern, indem beispielsweise die an einem Querträger einander gegenüberliegenden Adaptervorrichtungen gegeneinander ausgetauscht werden. Bei dem Austausch zweier gegenüberliegender Adaptervorrichtungen müssen diese gedreht werden, so dass eine zuvor in Bezug auf die vertikale Mittelebene der Adaptervorrichtung in Fahrtrichtung des Kraftfahrzeugs nach vorne versetztes Aufbautenbefestigungsmittel nach dem Drehen und Anordnen an der gegenüberliegenden Seite des Querträgers nach hinten versetzt ist. Dadurch lässt sich der erfindungsgemäße Systemrahmen an unterschiedliche Längen von Aufbauten anpassen. Hierbei kann beispielsweise vorgesehen sein, dass lediglich an einem Querträger die Adaptervorrichtungen gegeneinander getauscht werden und in einem anderen Querträger unverändert verbleiben. Auch ist es möglich, an dem zweiten Querträger auch einen Tausch der Adaptervorrichtungen vorzunehmen. Somit lässt sich ohne das Vorsehen alternativer Adaptervorrichtungen der Systemrahmen an drei unterschiedliche Längen von Aufbauten auf einfache Art und Weise anpassen, indem lediglich zwei oder vier Adaptervorrichtungen seitenvertauscht werden.

Das Vorsehen der erfindungsgemäßen Adaptervorrichtungen ermöglicht somit eine Anpassung des Rahmensystems an verschiedene Aufbauten auf konstruktiv einfache Art und Weise, wobei auch eine nachträgliche Anpassung an neue Abmessungen durch das Vorsehen einer alternativen Adaptervorrichtung ermöglicht werden kann.

Der Systemrahmen des erfindungsgemäßen Rahmensystems dient zur Aufnahme verschiedener Aufbauten. Der Systemrahmen kann fest oder lösbar mit einem Fahrgestell eines Kraftfahrzeugs verbunden werden. Unter "lösbarer Verbindung zweier Teile" wird im Rahmen dieser Erfindung ein zerstörungsfreies Lösen der beiden Teile verstanden. Eine derartige Verbindung ist zumeist eine form- und/oder kraftschlüssige Verbindung.

Unter "fester Verbindung" wird die Verbindung verstanden, die nicht zerstörungsfrei gelöst werden kann, beispielsweise eine stoffschlüssige Verbindung.

Im auf dem Fahrgestell des Kraftfahrzeugs befestigten Zustand stützt sich der Systemrahmen auf dem Fahrgestell des Kraftfahrzeugs ab. Somit wird die Gewichtskraft der Aufbauten über die Abstützflächen des Systemrahmens auf das Fahrgestell übertragen. Im an dem Kraftfahrzeug befestigten Zustand entspricht die vertikale Mittelebene des Systemrahmens der sich in Fahrtrichtung des Fahrzeugs erstreckenden vertikalen Mittelebene des Fahrzeugs.

Vorzugsweise ist vorgesehen, dass an einem Ende eines der Querträger mindestens zwei Auflager gebildet sind, wobei die Adaptervorrichtung in jeweils einer der vorgegebenen Positionen auf einem der Auflager aufliegt. Mittels der Auflager kann somit in vorteilhafter Weise die Kraft von der Adaptervorrichtung auf den Querträger übertragen werden. Ferner wird mittels der zwei Auflager in vorteilhafter Weise die Positionierung der Adaptervorrichtung in unterschiedlichen Positionen ermöglicht.

Dabei kann vorgesehen sein, dass die mindestens zwei Auflager in zueinander unterschiedlicher Höhe gebildet sind. Dadurch lässt sich die Höhenposition der Adaptervorrichtung und somit die Höhenposition der Abstützflächen und der Aufbautenbefestigungsmittel in vorteilhafter Weise verändern. Bei Containern können Ausführungsvarianten existieren, bei denen aus einer Bodenebene, in der die Gegenstücke zu den Aufbautenbefestigungsmitteln angeordnet sind, Kufen hervorstehen, mittels derer die Container beispielsweise über einen festen ebenen Boden gezogen werden können. Dies wird häufig eingesetzt, wenn die Container als Kabinen ausgebildet sind, die an unterschiedlichen Orten aufgestellt werden sollen und mittels der Kufen in ihre Endposition verbracht werden. Die aus der Bodenebene hervorstehenden Kufen können jedoch mit den Längs- oder Querträgern des Systemrahmens kollidieren, so dass die Höhenposition der Abstützflächen und der Aufbautenbefestigungsmittel für den Transport eines derartigen Containers erhöht werden muss.

Es kann auch vorgesehen sein, dass die mindestens zwei Auflager in Längsrichtung des Querträgers zueinander versetzt angeordnet sind. Dadurch lassen sich die Adaptervorrichtungen in einer Richtung quer zu der Mittelebene des Systemrahmens an unterschiedlichen Positionen anordnen, so dass eine Anpassung an Aufbauten unterschiedlicher Breite möglich ist.

Vorzugsweise ist vorgesehen, dass die Adaptervorrichtungen jeweils eine Platte aufweisen, die die Abstützfläche bildet, wobei die Platte eine Aussparung aufweist, durch die sich das Aufbautenbefestigungsmittel erstreckt. Ein derartiger Aufbau hat sich als besonders vorteilhaft erwiesen.

In einem bevorzugten Ausführungsform der Erfindung ist vorgesehen, dass die Adaptervorrichtungen jeweils zwei parallel angeordnete Befestigungsvorsprünge aufweisen, in die Befestigungsmittel zur Verbindung mit einem der Querträger eingreifen oder an denen Befestigungsmittel angreifen. Über derartige Befestigungsvorsprünge lassen sich die Adaptervorrichtungen in besonders vorteilhafter Weise an einem Querträger befestigen. Als Befestigungsmittel können beispielsweise Steck- oder Schraubbolzen oder Ähnliches vorgesehen sein. Auch können die Befestigungsmittel Klemmen oder Klinken sein, die an die Befestigungsmittel angreifen.

Vorzugsweise umfassen die Befestigungsvorsprünge den Querträger seitlich. Dadurch wird ein Überlappen der Befestigungsvorsprünge und des Querträgers erreicht, wodurch eine Anordnung der Befestigungsmittel auf vorteilhafte Weise erreicht werden kann.

Es kann vorgesehen sein, dass an dem Querträger und in den Befestigungsvorsprüngen der Adaptervorrichtungen Durchgangsbohrungen gebildet sind, wobei bei einer Anordnung der Adaptervorrichtung in einer der vorgegebenen Positionen zumindest ein Teil der Durchgangsbohrungen zueinander ausgerichtet sind und sich das Befestigungsmittel durch die ausgerichteten Durchgangsbohrungen erstreckt. Dadurch kann auf vorteilhafte Weise gewährleistet werden, dass die Adaptervorrichtungen an den vorgegebenen unterschiedlichen Positionen mittels der Befestigungsmittel befestigt werden kann. Hierzu kann sowohl an dem Querträger als auch an den Befestigungsvorsprüngen Muster von Durchgangsbohrungen vorgesehen sein, wobei in den unterschiedlichen Positionen zumindest zwei oder mehrere Durchgangsbohrungen zueinander ausgerichtet sind.

Die Erfindung kann auf vorteilhafte Weise vorsehen, dass die Auflager jeweils durch mindestens eine Auflagerfläche gebildet sind, wobei die Adaptervorrichtungen jeweils eine an die Auflagerfläche angepasste Lagerachse aufweisen, über die sich eine Adaptervorrichtung auf den Auflagerflächen eines der Auflager abstützt. Dadurch wird sichergestellt, dass in den unterschiedlichen vorgegebenen Positionen eine zuverlässige Abstützung der Adaptervorrichtung an dem Querträger erfolgt.

Die Querträger können an ihren Enden Aufnahmevorrichtungen zur Aufnahme der Adaptervorrichtungen aufweisen. Die Aufnahmevorrichtungen können beispielsweise lösbar mit den Enden der Querträger verbunden sein. Dadurch können die erfindungsgemäßen Adaptervorrichtungen auch bei herkömmlichen Trägerrahmen nachgerüstet werden, indem an den Enden der Querträger die Aufnahmevorrichtungen für die Adaptervorrichtungen angebracht werden.

Die Erfindung sieht ferner ein Kraftfahrzeug mit einem erfindungsgemäßen Rahmensystem und einem an dem Rahmensystem befestigten Aufbau vor.

Die Aufbautenbefestigungsmittel können beispielsweise als Twistlocks ausgebildet sein. Das Twistlocksystem ist für die Sicherung von Aufbauten ein bewährtes, besonders vorteilhaftes System. Selbstverständlich können auch andere Verriegelungen vorgesehen sein.

Die Aufbauten, mit denen das erfindungsgemäße Rahmensystem verwendet wird, können genormte Eckbeschläge aufweisen, in die die Aufbautenbefestigungsmittel eingreifen.

Im Folgenden wird unter Bezugnahme auf die nachfolgenden Figuren die Erfindung näher erläutert.

Es zeigen:
- Figur 1: eine schematische perspektivische Darstellung eines erfindungsgemäßen Rahmensystems,
- Figur 2a: eine schematische Detaildarstellung eines Querträgers eines erfindungsgemäßen Rahmensystems mit zwei in einer ersten Position angeordneten Adaptervorrichtungen,
- Figur 2b: eine vergrößerte Darstellung der an dem Querträger der Figur 2a angeordneten Adaptervorrichtung,
- Figur 3a: eine schematische Detaildarstellung eines Querträgers eines erfindungsgemäßen Rahmensystems mit in einer zweiten Position angeordneten Adaptervorrichtungen und
- Figur 3b: eine vergrößerte Darstellung einer der in Figur 3a dargestellten Adaptervorrichtu ng.

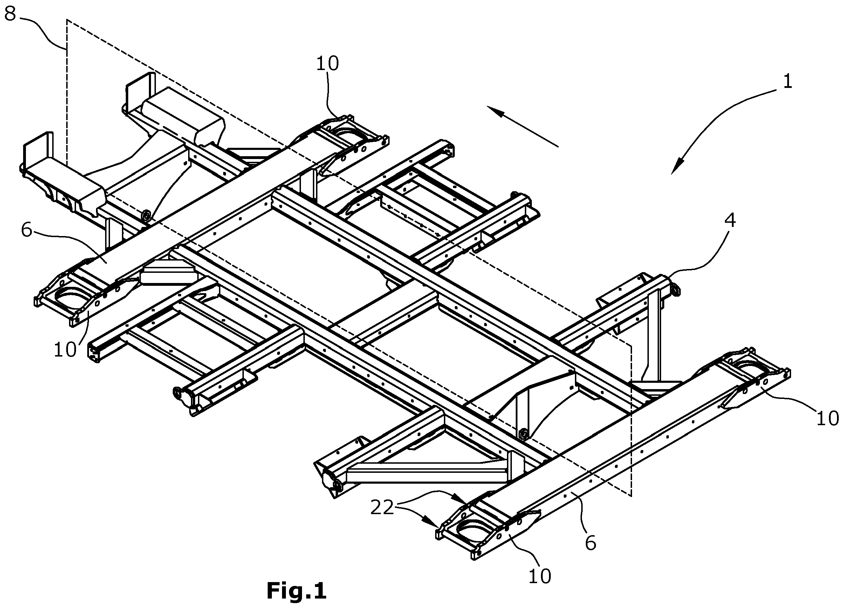

In Figur 1 ist ein Rahmensystem 1 für Aufbauten von Kraftfahrzeugen schematisch in einer Perspektivdarstellung gezeigt. Das Rahmensystem kann insbesondere an Lastkraftwagen angeordnet werden. Hierfür weist das Rahmensystem einen Systemrahmen 4 auf, mittels dem das Rahmensystem 1 auf einem Fahrgestell des Kraftfahrzeugs befestigt werden kann. Die Aufbauten, die auf dem Rahmensystem angeordnet werden können sowie das Kraftfahrzeug sind in der Figur nicht dargestellt.

Der Systemrahmen 4 weist zwei Querträger 6 auf, die quer zu einer Mittelebene 8 angeordnet sind.

Die vertikale Mittelebene 8 entspricht im auf dem Kraftfahrzeug aufgesetzten Zustand des Systemrahmens 4 der sich in Fahrtrichtung des Kraftfahrzeugs erstreckenden Mittelebene. Die Fahrtrichtung des Kraftfahrzeugs ist in Fig. 1 durch einen entsprechenden Pfeil dargestellt.

An den sich gegenüberliegenden Enden der Querträger 6 sind Aufnahmevorrichtungen 10 für in der Fig. 1 nicht dargestellte Adaptervorrichtungen 12 angeordnet. Die Aufnahmevorrichtungen 10 können lösbar oder fest mit den Querträgern 6 verbunden sein.

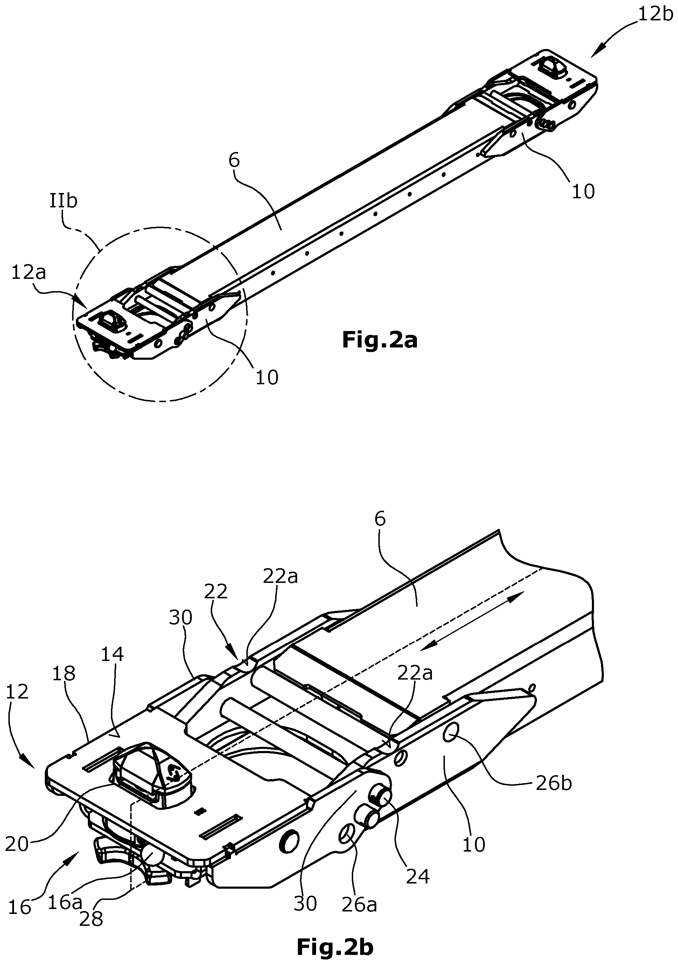

Wie am besten aus den Figuren 2a-3b hervorgeht, bilden die Adaptervorrichtungen 12 jeweils eine Abstützfläche 14 und weisen jeweils ein Aufbautenbefestigungsmittel 16 auf. Die Abstützfläche 14 ist durch eine Platte 18 gebildet, in der eine Aussparung 20 vorgesehen ist, durch die sich das Aufbautenbefestigungsmittel 16, beispielsweise ein Twistlock, erstreckt. Auf der Abstützfläche 14 liegen die Aufbauten im an dem Systemrahmen 4 befestigten Zustand auf. Mittels der Aufbautenbefestigungsmittel 16 wird in entsprechend ausgebildete Beschläge eines Aufbaus eingegriffen und dieses an dem Systemrahmen 4 befestigt.

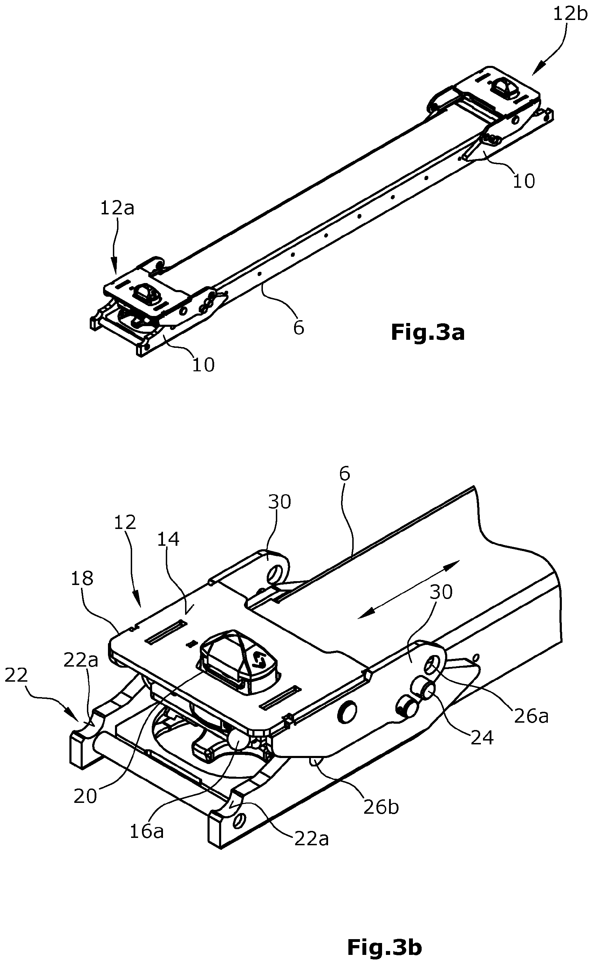

Die Adaptervorrichtungen 12 sind lösbar mit den Aufnahmevorrichtungen 10 verbunden. Die Adaptervorrichtungen 12 sind austauschbar ausgebildet. Das bedeutet, dass die Adaptervorrichtungen 12 beispielsweise gegen anders ausgebildete Adaptervorrichtungen ausgetauscht werden können. Bei den in den Figuren 2a-3b gezeigten Ausführungsformen sind die Adaptervorrichtungen gegeneinander tauschbar. Dabei sind die in Bezug auf die Mittelebene 8 des Systemrahmens 4 auf einer ersten Seite des Systemrahmens angeordneten Adaptervorrichtungen 12a gegen die auf der gegenüberliegenden Seite angeordneten Adaptervorrichtungen 12b vertauschbar. Ferner sind die Adaptervorrichtungen 12 an unterschiedlichen vorgegebenen Positionen an den Aufnahmevorrichtungen 10 befestigbar. Bei dem in den Figuren 2a, 2b ausgeführten Ausführungsbeispiel sind diese an einer ersten, unteren Position an der Aufnahmevorrichtung 10 befestigt und in der in den Figuren 3a und 3b dargestellten Ansicht in einer zweiten, erhöhten Position.

Mittels Adaptervorrichtungen lässt sich der erfindungsgemäße Systemrahmen 4 an unterschiedliche Aufbauten anpassen. Hierbei ist eine Anpassung an unterschiedliche Höhenanforderungen der Abstützflächen 14 bzw. Aufbautenbefestigungsmittel 16, an unterschiedliche Breiten der Aufbauten und unterschiedlichen Längen der Aufbauten möglich.

An der Aufnahmevorrichtung 10 der Querträger 6 sind an jedem Ende jeweils mindestens zwei Auflager 22 gebildet. Die Auflager 22 weisen jeweils zwei Auflagerflächen 22a auf. Die Adaptervorrichtung 12 weist an ihrer Unterseite eine nicht dargestellte Lagerachse auf, mit der sich die Adaptervorrichtung 12 auf den Auflagerflächen 22a eines Auflagers 22 abstützt.

Die Auflager 22 sind in unterschiedlicher Höhe ausgebildet und in Längsrichtung des Querträgers 6 zueinander versetzt. Bei der in den Figuren 2a und 2b dargestellten Anordnung ist die Adaptervorrichtung 12 an der äußeren, unteren Position angeordnet. Die Lagerachse liegt dabei auf dem in Figur 3b gezeigten Auflager 22 auf. Bei der in den Figuren 3a und 3b dargestellten Anordnung ist die Adaptervorrichtung 12 in der oberen, inneren Position. Die Lagerachse der Adaptervorrichtung 12 liegt auf dem in Fig. 2b ersichtlichen Auflager 22 auf.

Die Adaptervorrichtung 12 ist mittels eines Befestigungsmittels an der Aufnahmevorrichtung 10 befestigbar. Das Befestigungsmittel 24 ist in dem dargestellten Ausführungsbeispiel als Steckbolzen ausgebildet, der durch Durchgangsbohrungen 26a in der Adaptervorrichtung 12 und Durchgangsbohrungen 26b in der Aufnahmevorrichtung 10 gesteckt ist. Die Adaptervorrichtung 12 weist hierbei mehrere Durchgangsbohrungen 26a auf und die Aufnahmevorrichtung 10 mehrere Durchgangsbohrungen 26b. Wie aus den Figuren 2b und 3b ersichtlich ist, sind jeweils in einer der vorgegebenen Positionen, in der die Adaptervorrichtung 12 angeordnet werden kann, einige der Durchgangsbohrungen 26a, 26b zueinander ausgerichtet, so dass die Befestigungsmittel 24 durch diese gesteckt werden kann.

Das Aufbautenbefestigungsmittel 16 ist beispielsweise als Twistlock ausgebildet, wobei die Betätigungsvorrichtung 16a unterhalb der Platte 18 angeordnet und betätigbar ist. Dadurch wird sichergestellt, dass auch bei einem auf der Abstützfläche 14 aufliegenden Aufbau eine Betätigung des Twistlocks auf einfache Art und Weise möglich ist.

Wie am besten aus Fig. 2b ersichtlich ist, ist das Aufbautenbefestigungsmittel 16 bezogen auf eine in Längsrichtung des Querträgers 6 sich erstreckende vertikale Mittelebene 28 exzentrisch angeordnet. Mit anderen Worten: Bei der in Fig. 2b gezeigten Position befindet sich das Aufbautenbefestigungsmittel 16 in Fahrtrichtung nach vorne gegenüber der Mittelebene versetzt. Dadurch wird erreicht, dass ein Austauschen der sich gegenüberliegenden Adaptervorrichtungen 12a, 12b und der damit verbundenen seitenverkehrten Anordnung der Adaptervorrichtungen 12a, 12b, die zuvor in Fahrtrichtung nach vorne versetzten Aufbautenbefestigungsmittel 12a, 12b in Fahrtrichtung gegenüber der Mittelebene 28 nach hinten versetzt sind. Dadurch werden die Abstände der Aufbautenbefestigungsmittel 16 der vorderen und hinteren Querträger in Richtung der vertikalen Mittelebene 8 des Systemrahmens 4 verändert, wodurch der Systemrahmen an unterschiedliche Längen von Aufbauten angepasst werden kann.

Der besondere Vorteil bei dem erfindungsgemäßen System liegt darin, dass paarweise gleich ausgebildete Adaptervorrichtungen 12 eingesetzt werden können. Eine Anpassung an unterschiedliche Höhenanforderungen sowie Abständen in Längs- und Breitenrichtung der Aufbautenbefestigungsmittel 16 kann durch unterschiedliche Positionierung der Adaptervorrichtungen 12 an den Aufnahmevorrichtungen 10 und durch einen Seitentausch der Adaptervorrichtungen 12 erfolgen. Dadurch ist der vorrichtungstechnische Aufwand sehr gering gehalten.

Die Adaptervorrichtungen 12 können zur Befestigung an den Aufnahmevorrichtungen 10 der Querträger 6 parallele Befestigungsvorsprünge 30 aufweisen, die die Aufnahmevorrichtung 10 jeweils seitlich umgreifen. In den Befestigungsvorsprüngen sind die Durchgangsbohrungen 26a angeordnet.

## Patentansprüche

1. Rahmensystem (1) für Aufbauten von Kraftfahrzeugen, insbesondere Lastkraftwagen,
- mit einem Systemrahmen (4) mit mindestens zwei Querträgern (6), die quer zu einer vertikalen Mittelebene (8) des Systemrahmens (4) angeordnet sind,
- mit Abstützflächen (14), auf denen die Aufbauten im an dem Systemrahmen (4) befestigten Zustand aufliegen, wobei die Abstützflächen (14) an den Enden von mindestens zwei der Querträger (6) angeordnet sind, und
- mit Aufbautenbefestigungsmitteln (16) zum lösbaren Befestigen der Aufbauten an dem Systemrahmen (4), wobei die Aufbautenbefestigungsmittel (16) in den Abstützflächen (14) angeordnet sind,
wobei jeweils eine der Abstützflächen (14) durch eine Adaptervorrichtung (12) gebildet ist, die lösbar an einem Ende eines der Querträger befestigt ist, wobei die Adaptervorrichtungen (12) austauschbar ausgebildet sind und/oder eine Adaptervorrichtung (12) an unterschiedlichen, fest vorgegebenen Positionen an einem Ende eines der Querträger (6) befestigbar ist,
**dadurch gekennzeichnet, dass**
die in Bezug auf die Mittelebene (8) des Systemrahmens (4) auf unterschiedlichen Seiten des Systemrahmens (4) angeordneten Adaptervorrichtungen (12) gegeneinander austauschbar sind und das Aufbautenbefestigungsmittel (16) in Bezug auf eine vertikale Mittelebene (28) der Adaptervorrichtung (12) exzentrisch an der Adaptervorrichtung (12) angeordnet ist, wobei sich die Mittelebene (28) der Adaptervorrichtung (12) im an dem Querträger (6) befestigten Zustand in Längsrichtung des Querträgers (6) erstreckt.

2. Rahmensystem nach Anspruch 1, **dadurch gekennzeichnet, dass** an einem Ende eines der Querträger (6) mindestens zwei Auflager (22) gebildet sind, wobei die Adaptervorrichtung (12) in jeweils einer der vorgegebenen Positionen auf einem der Auflager (22) aufliegt.

3. Rahmensystem nach Anspruch 2, **dadurch gekennzeichnet, dass** die mindestens zwei Auflager (22) in zueinander unterschiedlicher Höhe gebildet sind.

4. Rahmensystem nach Anspruch 2 oder 3, **dadurch gekennzeichnet, dass** die mindestens zwei Auflager (22) in Längsrichtung des Querträgers (6) zueinander versetzt angeordnet sind.

5. Rahmensystem nach einem der Ansprüche 1 bis 4, **dadurch gekennzeichnet, dass** die Adaptervorrichtungen (12) jeweils eine Platte (18) aufweisen, die die Abstützfläche (14) bildet, wobei die Platte (18) eine Aussparung (20) aufweist, durch die sich das Aufbautenbefestigungsmittel (16) erstreckt.

6. Rahmensystem nach einem der Ansprüche 1 bis 5, **dadurch gekennzeichnet, dass** die Adaptervorrichtungen (12) jeweils zwei parallel angeordnete Befestigungsvorsprünge (30) aufweisen, in die Befestigungsmittel (24) zur Verbindung mit einem der Querträger (6) eingreifen oder an denen Befestigungsmittel (24) angreifen.

7. Rahmensystem nach Anspruch 6, **dadurch gekennzeichnet, dass** die Befestigungsvorsprünge (30) den Querträger (6) seitlich umfassen.

8. Rahmensystem nach Anspruch 6 oder 7, **dadurch gekennzeichnet, dass** an dem Querträger (6) und in den Befestigungsvorsprüngen (30) der Adaptervorrichtung (12) Durchgangsbohrungen (26a,26b) gebildet sind, wobei bei einer Anordnung der Adaptervorrichtung (12) in einer der vorgegebenen Positionen zumindest ein Teil der Durchgangsbohrungen (26a,26b) zueinander ausgerichtet sind und sich das Befestigungsmittel (24) durch die ausgerichteten Durchgangsbohrungen (26a,26b) erstreckt.

9. Rahmensystem nach einem der Ansprüche 2 bis 8, **dadurch gekennzeichnet, dass** die Auflager (22) jeweils durch mindestens eine Auflagerfläche (22a) gebildet sind, wobei die Adaptervorrichtungen (12) jeweils eine an die Auflagerflächen (22a) angepasste Lagerachse aufweisen, über die sich eine Adaptervorrichtung auf der mindestens einen Auflagerfläche (22a) eines der Auflager (22) abstützt.

10. Kraftfahrzeug mit einem Rahmensystem (1) nach einem der Ansprüche 1 bis 9 und an dem Rahmensystem (1) befestigten Aufbau.

## Claims

1. A frame system (1) for structures of motor vehicles, in particular of trucks,
- comprising a system frame (4) having at least two cross members (6) arranged transversely to a vertical center plane (8) of the system frame (4),
- comprising supporting surfaces (14) on which the structures rest in the condition as fastened to the system frame (4), wherein the supporting surfaces (14) are arranged at the ends of at least two of the cross members (6), and
- comprising structure fastening means (16) for releasably fastening the structures to the system frame (4), wherein the structure fastening means (16) are arranged in the supporting surfaces (14),
wherein a respective one of the supporting surfaces (14) is constituted of an adapter device (12) which is releasably fastened to an end of one of the cross members, wherein the adapter devices (12) are configured in an exchangeable manner and/or an adapter device (12) is configured for fastening to an end of one of the cross members (6) at different fixedly predetermined positions,
**characterized in that**
the adapter devices (12) arranged on different sides of the system frame (4) with respect to the center plane (8) of the system frame (4) are mutually exchangeable and the structure fastening means (16) is eccentrically arranged at the adapter device (12) with respect to a vertical center plane (28) of the adapter device (12), wherein the center plane (28) of the adapter device (12) extends in the longitudinal direction of the cross member (6) in the condition as fastened to the cross member (6).

2. The frame system according to claim 1, **characterized in that** at an end of one of the cross members (6) at least two bearings (22) are formed, wherein the adapter device (12) rests on one of the bearings (22) in a respective one of the predetermined positions.

3. The frame system according to claim 2, **characterized in that** the at least two bearings (22) are formed at different levels with respect to each other.

4. The frame system according to claim 2 or 3, **characterized in that** the at least two bearings (22) are arranged in an offset manner with respect to each other in the longitudinal direction of the cross member (6).

5. The frame system according to any one of claims 1 to 4, **characterized in that** the adapter devices (12) respectively comprise a plate (18) forming the supporting surface (14), wherein the plate (18) comprises a recess (20) through which the structure fastening means (16) extends.

6. The frame system according to any one of claims 1 to 5, **characterized in that** the adapter devices (12) respectively comprise two parallelly arranged fastening protrusions (30) into which fastening means (24) are inserted for connecting to one of the cross members (6) or which are engaged by fastening means (24).

7. The frame system according to claim 6, **characterized in that** the fastening protrusions (30) laterally encompass the cross member (6).

8. The frame system according to claim 6 or 7, **characterized in that** through bore-holes (26a, 26b) are formed at the cross member (6) and in the fastening protrusions (30) of the adapter device (12), wherein, when the adapter device (12) is arranged in one of the predetermined positions, at least some of the through bore-holes (26a, 26b) are aligned which each other and the fastening means (24) extends through the aligned through bore-holes (26a, 26b).

9. The frame system according to any one of claims 2 to 8, **characterized in that** the bearings (22) are respectively formed by at least one bearing surface (22a), wherein the adapter devices (12) each comprise a bearing axis adapted to the bearing surfaces (22a), via which an adapter device is supported on the at least one bearing surface (22a) of a bearing (22).

10. A motor vehicle comprising a frame system (1) according to any one of claims 1 to 9 and a structure fastened to the frame system (1).

## Revendications

1. Système de cadre (1) destiné à des superstructures de véhicules automobiles, notamment de camions, ledit système de cadre comprenant
- un cadre de système (4) pourvu d'au moins deux poutres transversales (6) disposées transversalement à un plan médian vertical (8) du cadre de système (4),
- des surfaces de support (14) sur lesquelles les superstructures reposent à l'état fixé au cadre de système (4), les surfaces de support (14) étant disposées aux extrémités d'au moins deux des poutres transversales (6), et
- des moyens de fixation de superstructure (16) destinés à fixer de manière amovible la superstructure au cadre de système (4), les moyens de fixation de superstructure (16) étant disposés dans les surfaces de support (14),
chacune des surfaces de support (14) étant formée par un dispositif adaptateur (12) qui est fixée de manière amovible à une extrémité de l'une des poutres transversales, les dispositifs adaptateurs (12) étant conçus pour être interchangeables et/ou un dispositif adaptateur (12) pouvant être fixé à différentes positions fixes spécifiées à une extrémité de l'une des poutres transversales (6),
**caractérisé en ce que**
les dispositifs adaptateurs (12), disposés sur des côtés différents du cadre de système (4) par rapport au plan médian (8) du cadre de système (4), sont interchangeables et le moyen de fixation de superstructure (16) est disposé de manière excentrée sur le dispositif adaptateur (12) par rapport à un plan médian vertical (28) du dispositif adaptateur (12), le plan médian (28) du dispositif adaptateur (12) s'étendant dans la direction longitudinale de la poutre transversale (6) lorsque la poutre transversale (6) est à l'état fixé.

2. Système de cadre selon la revendication 1, **caractérisé en ce qu'**au moins deux supports (22) sont formés à une extrémité de la poutre transversale (6), le dispositif adaptateur (12) venant en appui sur l'un des supports (22) dans l'une des positions spécifiées.

3. Système de cadre selon la revendication 2, **caractérisé en ce que** les au moins deux supports (22) sont formés à des hauteurs différentes.

4. Système de cadre selon la revendication 2 ou 3, **caractérisé en ce que** les au moins deux supports (22) sont disposés de manière décalée les uns par rapport aux autres dans la direction longitudinale de la poutre transversale (6).

5. Système de cadre selon l'une des revendications 1 à 4, **caractérisé en ce que** les dispositifs adaptateurs (12) comportent chacun une plaque (18) qui forme la surface d'appui (14), la plaque (18) comportant un évidement (20) à travers lequel s'étend le moyen de fixation de superstructure (16).

6. Système de cadre selon l'une des revendications 1 à 5, **caractérisé en ce que** les dispositifs adaptateurs (12) comportent chacun deux saillies de fixation parallèles (30), dans lesquelles s'engagent des moyens de fixation (24) destinés à être reliés à l'une des poutres transversales (6) ou sur lesquelles s'engagent des moyens de fixation (24).

7. Système de cadre selon la revendication 6, **caractérisé en ce que** les saillies de fixation (30) enveloppent latéralement la poutre transversale (6).

8. Système de cadre selon la revendication 6 ou 7, **caractérisé en ce que** des trous traversants (26a, 26b) sont ménagés sur la poutre transversale (6) et dans les saillies de fixation (30) du dispositif adaptateur (12), au moins une partie des trous traversants (26a, 26b) étant alignés lorsque le dispositif adaptateur (12) est disposé dans l'une des positions spécifiées et le moyen de fixation (24) s'étendant à travers les trous traversants (26a, 26b) alignés.

9. Système de cadre selon l'une des revendications 2 à 8, **caractérisé en ce que** les supports (22) sont formés chacun par au moins une surface d'appui (22a), les dispositifs adaptateurs (12) comportant chacun un axe d'appui qui est adapté aux surfaces d'appui (22a) et permet à un dispositif adaptateur de s'appuyer sur l'au moins une surface d'appui (22a) de l'un des supports (22).

10. Véhicule automobile comprenant un système de cadre (1) selon l'une des revendications 1 à 9 et une superstructure fixée au système de cadre (1).
